# EUROPÄISCHE PATENTSCHRIFT

(11) **EP 2 828 566 B1**
(45) Veröffentlichungstag und Bekanntmachung des Hinweises auf die Patenterteilung: **01.03.2017**
(21) Anmeldenummer: 13711656.2
(22) Anmeldetag: 20.03.2013
(51) Int. Cl.: B63B 27/24, F16L 37/08, F16L 37/36, F16L 55/10, B67D 7/32, F16K 17/36

(54) **KUPPLUNG ZUM ANSCHLUSS FLUIDFÜHRENDER LEITUNGEN**
COUPLING FOR CONNECTING FLUID-CONDUCTING LINES
RACCORD DESTINÉ À RACCORDER DES CONDUITS CONDUCTEURS DE FLUIDE

(30) Priorität: 23.03.2012 DE 102012102509; 10.04.2012 DE 102012103061
(43) Veröffentlichungstag der Anmeldung: 28.01.2015
(73) Patentinhaber: Von Keitz, Andreas, 65582 Diez (DE)
(72) Erfinder: Von Keitz, Andreas, 65582 Diez (DE)
(74) Vertreter: Blumbach Zinngrebe
(86) Internationale Anmeldenummer: PCT/EP2013/055801
(87) Internationale Veröffentlichungsnummer: WO 2013/139847

(56) Entgegenhaltungen:
- DE-A1- 3 621 951
- DE-A1-102005 006 088
- DE-C1- 4 430 132
- DE-U1- 29 911 281
- GB-A- 2 128 701
- US-A- 3 606 244

## Beschreibung

Die Erfindung betrifft allgemein Kupplungen zur Verbindung von Leitungen, wie insbesondere von Schlauchleitungen untereinander oder zur Ankupplung von Schlauchleitungen an Armaturen. Insbesondere betrifft die Erfindung selbstabdichtende Kupplungen, beziehungsweise Trockenkupplungen, also Kupplungen, deren Kupplungsteile die Leitungen bei der Auftrennung der Kupplung abdichten.

Aus der DE 299 11 281 U1 ist eine Schnellkupplung für die Verbindung oder den Anschluss von Schlauchleitungen bekannt, die ein Einsteck- und ein Aufnahmeteil umfasst. Die Teile sind lösbar und flüssigkeitsdicht miteinander verrastbar. Im Durchströmkanal ist in beiden Teilen der Schnellkupplung ein federbelastetes Ventil mit Schließelementen angeordnet, wobei die Schließelemente mit Druckfedern belastet sind. Diese Schließelemente, beispielsweise in Form von Kugeln halten sich in zusammengekoppelten Zustand von Einsteck- und ein Aufnahmeteil gegenseitig geöffnet. Beim Trennen dieser Kupplungsteile werden dann die Schließelemente durch die Druckfedern in ihren Ventilsitz gepresst und dichten auf diese Weise die mit dem jeweiligen Kupplungsteil verbundene Leitung ab.

Generell besteht auch bei selbstdichtenden Kupplungen das Problem, dass beim Trennen der Kupplungsteile Inhalt aus den Leitungen austreten kann. Zwar verhindern die Ventile in den Kupplungsteilen, dass die Leitungen nach dem Trennen dauerhaft offen bleiben, allerdings kann es beim Auftrennen während des Schließvorgangs der Ventile immer noch zu einem Austritt von Leitungsinhalt kommen.

Besonders bei tiefkalten Fluiden kann es beim Auftrennen auch zu einem Ausfrieren des Leitungsinhalts oder von Luftfeuchtigkeit an den Ventilen kommen. Dies kann dann dazu führen, dass die Ventile nicht mehr dicht schließen und der Austritt des Leitungsinhalts nicht gestoppt wird. Dies ist insbesondere auch in Bezug auf die Brandgefahr bei der Leitung brennbarer Medien kritisch.

Aus der DE 10 2005 006 088 A1 ist ferner eine Schnellkupplung zum Aneinanderkoppeln fluidführender Leitungen offenbart mit einem ersten und einem zweiten Kupplungsteil sowie einer Verriegelungsmechanik. Die Verriegelungsmechanik ist allerdings nicht mit der Arretiereinrichtung verbunden, so dass bei einer Betätigung der Verriegelungsmechanik zur Entkopplung der beiden aneinander gekoppelten Kupplungsteile keine Abdichtung vor der Trennung der beiden Kupplungsteile erfolgt. Eine Schliessstellung der Ventile ist also nicht sicher vor der Entkopplung möglich.

Die DE3621951A1 offenbart den Oberbegriff des Anspruchs 1, dieses Dokument bildet den nächsten Stand der Technik.

Der Erfindung liegt daher die Aufgabe zugrunde, Schnellkupplungen, wie sie aus dem Stand der Technik bekannt sind, hinsichtlich ihrer Leckage beim Trennen der Kupplung, insbesondere bei der Leitung kryogener Fluide zu verbessern. Gleichzeitig soll die Kupplung auch für die Leitung brennbarer oder explosive Gemische bildender Medien eine hohe Feuerfestigkeit auch im getrennten Zustand aufweisen.

Diese Aufgabe wird durch den Gegenstand des Anspruchs 1 gelöst. Vorteilhafte Ausgestaltungen und Weiterbildungen der Erfindung sind in den abhängigen Ansprüchen angegeben.

Demgemäß sieht die Erfindung eine Schnellkupplung zum Aneinanderkoppeln fluidführender Leitungen vor, welche
- ein erstes Kupplungsteil und
- ein zweites Kupplungsteil umfasst, sowie eine Dichtung zum Abdichten der beiden Kupplungsteile in aneinandergekoppeltem Zustand. Die Schnellkupplung weist eine Verriegelungsmechanik auf, um die beiden Kupplungsteile lösbar aneinander zu koppeln, wobei
- das erste Kupplungsteil eine erste Ventilanordnung und das zweite Kupplungsteil eine zweite Ventilanordnung aufweist. Jede der beiden Ventilanordnungen umfasst ein axial verschiebbares Ventil und einen korrespondierenden Ventilsitz, so dass in zusammengeführtem Zustand von Ventil und Ventilsitz der jeweilige Fluidkanal des Kupplungsteiles fluiddicht abgedichtet ist. Das Ventil ist besonders bevorzugt als Ventilteller ausgeführt. Die Ventile der zusammengesetzten Kupplung, also in zusammengekoppeltem Zustand der Kupplungsteile sind in axialer Richtung gegenüberliegend angeordnet, wobei das Ventil der ersten Ventilanordnung eine Öffnung aufweist, in welcher ein Stößel axial beweglich gehaltert ist, so dass der Stößel von einer ersten Stellung in eine zweite Stellung bewegbar ist. In der zweiten Stellung ragt dabei der Stössel aus dem Ventil der ersten Ventilanordnung weiter heraus, als in der ersten Stellung, so dass in zusammengekoppeltem Zustand der Kupplungsteile der Stößel die beiden Ventile auseinanderhält und damit die Fluidkanäle der Kupplungsteile miteinander verbunden sind. Der Stößel ist mit einer Arretiereinrichtung in der zweiten axialen Stellung gegenüber dem Ventil verrastbar, um die Ventilanordnung offenzuhalten. Die Verriegelungsmechanik ist mit der Arretiereinrichtung wirkverbunden, so dass bei einer Betätigung der Verriegelungsmechanik zur Entkopplung der beiden aneinander gekoppelten Kupplungsteile noch vor der Trennung der Kupplungsteile die Arretierung des Stößels gelöst wird und die beiden Ventile mit dem jeweiligen Ventilsitz zusammengeführt werden und so die Fluidkanäle der Kupplungsteile abdichten.

Durch den Mechanismus, bei welchem durch Lösen der Arretierung zuerst die Ventile in ihre Ventilsitze geführt werden, bevor die Kupplungsteile getrennt werden, wird vermieden, dass beim Trennen der Kupplungsteile noch Fluid aus den Ventilanordnungen austreten kann.

Um auch eine hohe Feuerfestigkeit, beziehungsweise Feuersicherheit der Ventile zu erreichen, weisen die Ventile konusförmige erste Dichtflächen und die Ventilsitze konusförmige zweite Dichtflächen auf, wobei der Öffnungswinkel der ersten Dichtflächen kleiner als der Öffnungswinkel der zweiten Dichtflächen ist. Mit der sich durch die unterschiedlichen Koni ergebenden hohen Anpressdruck auf die ringförmige Dichtungsfläche wird eine Abdichtung der Ventilanordnungen erzielt, die sowohl unter einer hohen Temperaturbelastung, wie sie bei einem Brand auftritt, als auch bei kryogenen Medien mit entsprechend niedrigen Temperaturen der Ventilanordnungen sicher funktioniert. Die Dichtigkeit insbesondere für kryogene Medien kann weiter durch tieftemperaturelastische Dichtelemente verbessert werden. Demgemäß ist in Weiterbildung der Erfindung vorgesehen, dass jeweils zumindest eine der Dichtflächen eines Ventils und des korrespondierenden Ventilsitzes ein tieftemperaturflexibles Kunststoff-Dichtungselement, wie etwa einen tieftemperaturflexiblen Dichtungsring aufweist. Als Material für den Dichtungsring sind beispielsweise Polytetrafluorethylen oder Fluorelastomere geeignet.

Die erfindungsgemäße Schnellkupplung kann insbesondere auch als Nottrenn-Kupplung eingesetzt werden, etwa wenn unvorhergesehen eine Zuglast auf die mit der Kupplung angekoppelte Leitung ausgeübt wird. Dazu umfasst die Verriegelungsmechanik einen Auslösemechanismus, welcher bei einer vorbestimmten Zugspannung auf eine an den Auslösemechanismus angeschlossene Zugeinrichtung die Verriegelungsmechanik betätigt und die Kupplungsteile trennt.

Die Erfindung wird nachfolgend genauer anhand der beigeschlossenen Figuren beschrieben. Dabei verweisen gleiche Bezugszeichen in den Figuren auf gleiche oder entsprechende Elemente. Es zeigen:
Fig. 1 einen schematischen Querschnitt durch Teile einer erfindungsgemäße Schnellkupplung in Arbeitsstellung mit geöffneten Ventilanordnungen,
Fig. 2 die Schnellkupplung während des Entkoppelns noch vor einer Trennung der Kupplungsteile der Kupplung,
Fig. 3 die Kupplungsteile der Schnellkupplung nach dem Entkoppeln,
Fig. 4 Details einer der Ventilanordnungen der Schnellkupplung in Gestalt eines Tellerventils, und
Fig. 5 eine Anwendung einer erfindungsgemäßen Schnellkupplung 1.

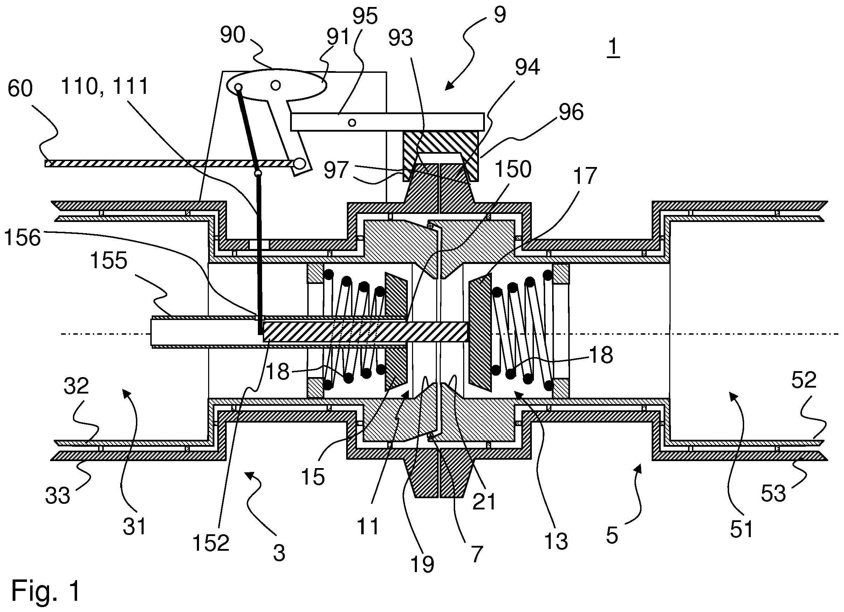

Fig. 1 zeigt die Schnellkupplung 1 im Querschnitt in Arbeitsstellung, also in zusammengekoppeltem Zustand des ersten Kupplungsteils 3 mit dem zweiten Kupplungsteil 5.

Die beiden Kupplungsteile 3, 5 sind mit einer Dichtung 7 dichtend verbunden. Die Kupplungsteile 3, 5 sind dabei mit einer schematisch dargestellten Verriegelungsmechanik 9 lösbar aneinander gekoppelt. Die Verriegelungsmechanik presst dabei die beiden Kupplungsteile 3, 5 in axialer Richtung zusammen, so dass auf die Dichtung 7 zwischen den Kupplungsteilen 3,5 ein zur Abdichtung hinreichender Anpressdruck ausgeübt wird. Für die Durchleitung kryogener Fluide wird für die Dichtung 7 vorzugsweise ein tieftemperaturflexibles Material, wie Polytetrafluorethylen (PTFE) und/oder ein Fluorelastomer verwendet.

Jedes der beiden Kupplungsteile 3, 5 weist eine Ventilanordnung 11, beziehungsweise 13 auf, um die Fluidkanäle der Kupplungsteile 3, 5 abzudichten. Sowohl die erste Ventilanordnung 11 im ersten Kupplungsteil, als auch die zweite Ventilanordnung 13 des zweiten Kupplungsteils 5 sind dabei als Tellerventile ausgestaltet. Die Tellerventile umfassen jeweils einen Ventil 15, 17 in Form eines Ventiltellers und einen Ventilsitz 19, 21. Die Ventilanordnungen können auch anders als in Form eines Ventiltellers ausgebildete Ventile, beispielsweise in Form eines Kolbens oder einer Kugel aufweisen. Die Tellerform ist vorteilhaft, da sie in axialer Richtung wenig Raum benötigt und die beiden zueinanderweisenden Flächen der Ventile beim Schließen der Ventilanordnung dazwischenliegendes Fluid fast oder sogar vollständig verdrängen.

Die Ventile 15, 17 sind axial verschiebbar gehaltert und dichten den jeweiligen Fluidkanal 31, 51 der Kupplungsteile 3, 5 fluiddicht ab, wenn die Ventile 15, 17 mit den korrespondierenden Ventilsitzen 19, 21 zusammengeführt werden. In aneinandergekoppelter, in Fig. 1 gezeigter Stellung der Kupplungsteile 3, 5 sind die beiden Ventile 15, 17 in axialer Richtung gegenüberliegend angeordnet.

Ohne Beschränkung auf das spezielle, in Fig. 1 schematisch gezeigte Ausführungsbeispiel sind gemäß einer bevorzugten Weiterbildung der Erfindung die beiden Ventile 15, 17 jeweils mit einer Feder 18 gekoppelt, beziehungsweise federbelastet, wobei die Feder eine Kraft auf den Ventilen 15, 17 axial in Richtung auf den Ventilsitz 19, 21 ausübt. Mittels dieser ausgeübten Federkraft werden die Ventilanordnungen 11, 13 bei getrennten Kupplungsteilen 3, 5 geschlossen.

Das Ventil 15 der ersten Ventilanordnung 11 weist eine Öffnung 150 auf, in welcher ein Stößel 152 axial beweglich gehaltert ist. Im Speziellen ist dazu bei der in Fig. 1 dargestellten Ausführungsform der Erfindung ein sich in axialer Richtung erstreckendes, am ersten Ventil 15 befestigtes Rohr 155 vorgesehen, welches als Führungselement für den Stößel 152 dient. In diesem Rohr 155 kann der Stößel 152 entlang seiner Längsrichtung gleiten.

Durch die axial bewegliche Halterung des Stößels 152 kann dieser von einer ersten Stellung in eine zweite Stellung bewegt werden, wobei in der zweiten Stellung der Stössel 152 aus dem Ventil 15 der ersten Ventilanordnung 11 weiter herausragt, als in der ersten Stellung. Vorzugsweise ragt der Stößel 152 in der ersten Stellung nicht hervor. Demgemäß schließt das Stößelende mit dem Ventil 15 entweder ab oder ist gegenüber der Öffnung 150 zurückgesetzt.

Bei der in Fig. 1 gezeigten Arbeitsstellung befindet sich der Stößel 152 dabei in der zweiten Stellung, ragt also aus dem Ventil 15 heraus.

Das erste Kupplungsteil 3 weist weiterhin eine Arretiereinrichtung 110 auf. Mit dieser Arretiereinrichtung 110 wird der Stößel 152 in der in Fig. 1 gezeigten zweiten axialen Stellung gegenüber dem Ventil 15 verrastet. Diese Arretiereinrichtung ist bevorzugt als Arretierstift 111 ausgeführt. Der Arretierstift ist zur Verrastung des Stößels 152 in der Arbeitsstellung in radialer Richtung durch eine auf dem Mantel des Rohres 155 angebrachte Öffnung 156 in das Rohr 155 eingeführt. Da der Stößel 152 in der zweiten axialen Stellung arretiert ist, hält dieser in der Arbeitsstellung die beiden Ventile 15, 17 gegen die auf die Ventile 15, 17 wirkende, von den Federn 18 ausgeübte Federkraft auseinander, so dass die Ventilanordnungen 11, 13 in geöffnetem Zustand gehalten werden und damit die beiden Fluidkanäle 31, 51 miteinander verbunden sind.

Wie weiter anhand von Fig. 1 zu erkennen ist, sind die die Verriegelungsmechanik 9 und die Arretiereinrichtung 110 wirkverbunden. Die spezielle Ausführung gemäß Fig. 1 ist dabei lediglich als beispielhaft zu sehen. Bei dem gezeigten Beispiel weist die Verriegelungsmechanik ein Drehelement 90 mit einem Exzenter 91 auf. Bei der Drehung des Drehelements betätigt der Exzenter einen Hebel 95, an welchem ein Klemmelement 96 befestigt ist. Dieses umgreift zwei Kragen 93, 94 der beiden Kupplungsteile 3, 5 und klemmt durch Andruck in radialer Richtung durch schräge Führungsflächen 97 an den Kragen 93 94 und/oder dem Klemmelement 96 die beiden Kupplungsteile 3, 5 in axialer Richtung zusammen. Obschon die Ausführung mit Klemmelement und Kragen eine besonders bevorzugte Anordnung zum Zusammenklemmen der Kupplungsteile 3, 5 darstellt, dienen die Elemente der Verriegelungsmechanik, so wie sie in den Figuren dargestellt sind, lediglich der Illustration des prinzipiellen Bewegungsablaufs bei der Entkopplung. So kann auch eine anders geartete Verriegelungsmechanik verwendet werden. Als Beispiel und vorteilhafte Weiterbildung der Erfindung sei an dieser Stelle eine Bewegung des Klemmelements und der Arretiereinrichtung über entsprechende Steuerkurven genannt. Ein derartiger Mechanismus wird in der DE 10 2005 006 088 A1 beschrieben, deren Inhalt bezüglich der Bewegung des Klemmelements und einer Notauslösung vollumfänglich auch zum Gegenstand der vorliegenden Anmeldung gemacht wird.

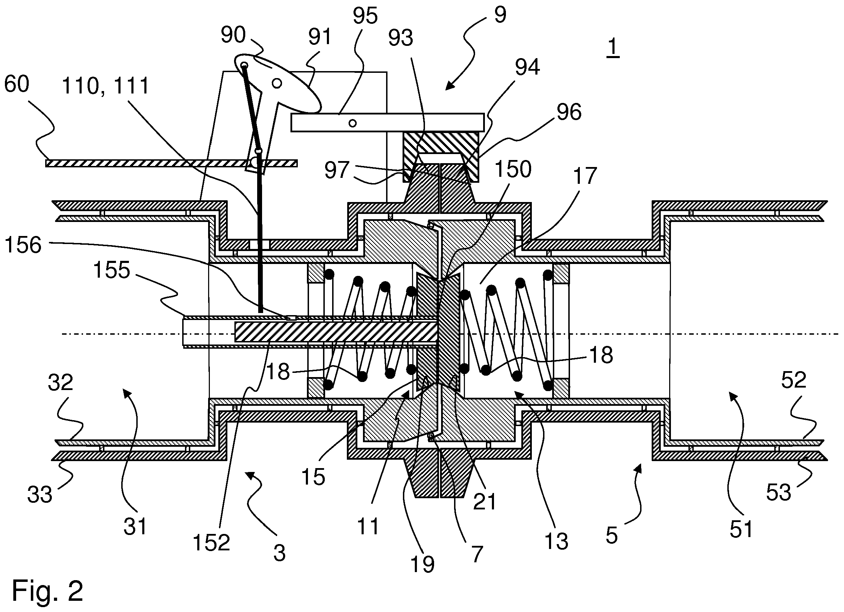

Wie anhand von Fig. 1 zu sehen, wird bei einer Betätigung der Verriegelungsmechanik 9 zur Entkopplung der beiden aneinander gekoppelten Kupplungsteile 3, 5, hier durch Drehung des Drehelements 90 noch vor der Trennung der Kupplungsteile die Arretierung des Stößels 152 gelöst, indem der mit dem Drehelement 90 wirkverbundene Arretierstift 111 radial auswärts bewegt und damit aus der Öffnung 156 des Rohres 155 gezogen wird. Aufgrund der durch die Federn 18 ausgeübten Kräfte werden dann die Ventil 15, 17 mit den jeweiligen Ventilsitzen 19, 21 zusammengeführt und damit die Fluidkanäle 31, 51 der Kupplungsteile 3, 5 abgedichtet. Diesen Zustand während des Entkoppelns zeigt Fig. 2.

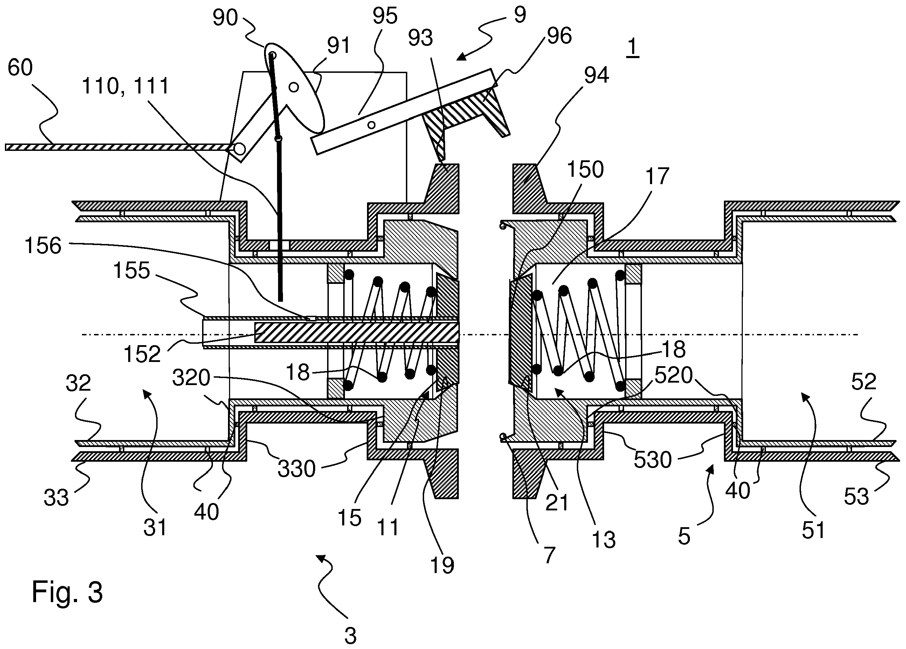

Wie ersichtlich, verbleibt zwischen den Ventilen 15, 17 kein Volumen mehr, in welchem sich noch das durch die Leitung geförderte Fluid befinden kann. Zumindest ist das verbleibende Volumen sehr gering. Das Fluid wird beim Zusammenführen der beiden Ventile dabei aus dem Bereich zwischen den Ventilen 15, 17 verdrängt. Dies bewirkt in vorteilhafter Weise, dass beim Trennen der Kupplungsteile kaum oder sogar überhaupt kein Fluid austreten kann. Das endgültige Trennen der beiden Kupplungsteile erfolgt durch Lösen der Klemmbacken 96. Bei dem in Fig. 1 und 2 gezeigten Beispiel wird dazu durch die Verriegelungsmechanik der Hebel 95 betätigt, so dass die Klemmbacken 96 radial auswärts bewegt werden. Fig. 3 zeigt dazu die beiden Kupplungsteile 3, 5 nach dem Entkoppeln.

Da ein Austritt des durchgeleiteten Fluids völlig, oder zumindest fast völlig vermieden wird, eignet sich die erfindungsgemäße Schnellkupplung insbesondere für die Durchleitung von Gefahrstoffen aller Art. Solche Gefahrstoffe können brand-, explosions- oder auch umweltgefährliche Stoffe umfassen. Besonders geeignet ist die Schnellkupplung auch für die Duchleitung kryogener, insbesondere auch brand- und explosionsgefährlicher kryogener Medien. Gedacht ist hier besonders an kaltverflüssigte brennbare Gase. Hier kommt kaltverflüssigtem Erdgas oder Methan eine besondere Bedeutung zu. Der erfindungsgemäße Mechanismus bei der Auftrennung der Kupplungsteile 3, 5, besonders auch in Verbindung mit der weiter unten beschriebenen bevorzugten Ausgestaltung der Dichtung der Tellerventile 11, 13 verhindert beim Auftrennen ein Ausfrieren des Mediums selbst oder von vorhandener Luftfeuchtigkeit im Bereich der Dichtungen. Ein Ausfrieren eines Mediums im Bereich der Dichtungsflächen kann zu einer dauerhaften Leckage der Ventilanordnung führen.

Eine weitere Eigenschaft der erfindungsgemäßen Schnellkupplung ist die Möglichkeit einer schnellen Trennung durch einfache Betätigung der Verriegelungsmechanik. Damit kann die erfindungsgemäße Schnellkupplung 1 insbesondere auch als Nottrennkupplung eingesetzt werden. Die Verriegelungsmechanik 9 umfasst dazu in Weiterbildung der Erfindung einen Auslösemechanismus, welcher bei einer vorbestimmten Zugspannung auf eine an den Auslösemechanismus angeschlossene Zugeinrichtung die Verriegelungsmechanik 9 betätigt und die Kupplungsteile 3, 5 trennt. Bei dem dargestellten Beispiel ist als Zugeinrichtung ein Seilzug 60 vorgesehen. Wird auf die Zugeinrichtung, beziehungsweise den Seilzug eine Zugspannung ausgeübt, wird bei dem dargestellten Beispiel das Drehelement 90 gedreht, wodurch sowohl eine Entriegelung des Stößels, 152, als auch eine Entriegelung der Verriegelungsmechanik durch radiale Auswärtsbewegung der Klemmbacken 96 erfolgt. Der Seilzug kann dann parallel zu einer an ein Kupplungsteil angeschlossenen Schlauchleitung verlegt werden, wobei dessen Länge kürzer gewählt wird, als die Länge der Leitung. Kommt es unvorhergesehen dazu, dass die Schlauchleitung gestrafft wird, so gerät vor der Schlauchleitung zuerst der Seilzug unter Zugspannung und trennt die Kupplungsteile 3, 5, noch bevor eine kritische Zuglast auf die Schlauchleitung einwirken kann. Der in Fig. 1 gezeigte Auslösemechanismus ist speziell so ausgelegt, dass der Seilzug am ersten Kupplungsteil 3 befestigt wird. Demgemäß würde hier die zu sichernde Schlauchleitung an diesem Kupplungsteil 3 angeschlossen.

Zusätzlich zu der Arretierung des Stößels 152 kann dieser mit der Verriegelungsmechanik 9 auch derart wirkverbunden werden, dass beim Zusammenkuppeln der Kupplungsteile 3, 5 zunächst die beiden Kupplungsteile 3, 5 miteinander dichtend verbunden und nach der dichtenden Verbindung mittels der Verriegelungsmechanik der Stößel 152 in axialer Richtung bewegt wird, so dass die beiden Ventile 15, 17 auseinandergedrückt werden und damit die Fluidkanäle 31, 51 der Kupplungsteile 3, 5 öffnen und miteinander verbinden. Dies ermöglicht auch ein Verbinden der Kupplungsteile 3, 5, ohne dass es zu einem Austritt von Fluid während des Kopplungsvorgangs kommen kann.

Für die Leitung kryogener Fluide ist es weiterhin günstig, wenn die Kupplungsteile 3, 5 wie auch bei dem in den Fig. 1 bis 3 gezeigten Ausführungsbeispiel doppelwandig ausgeführt sind. Dazu weisen die Kupplungsteile 3,5 innere Wandungselemente 32, 52 sowie die inneren Wandungselemente 32, 52 beabstandet umgebende äußere Wandungselemente 33, 53 auf. Vorzugsweise ist die Dichtung 7 so angeordnet, dass in zusammengekoppeltem Zustand die beiden inneren Wandungselemente 32, 52 der Kupplungsteile 3, 5 dichtend verbunden werden. Dies ist günstig, um auch an der Kopplungsstelle eine gute Wärmeisolation zu erzielen.

Denkbar ist aber auch beispielsweise eine Verbindung, wie etwa eine Verschweißung der inneren und äußeren Wandungselemente in dem Bereich, in welchem die Dichtung 7 die beiden Kupplungsteile 3,5 gegenüber der Umgebung abdichtet.

Gemäß einer besonders vorteilhaften Weiterbildung der Erfindung ist dabei, wie auch in den Figuren dargestellt, die Kupplung 1 so ausgeführt, dass die Kupplungsteile 3, 5 auch im zusammengekuppelten Zustand eine über beide Kupplungsteile 3, 5 einschließlich der Kupplungsstelle doppelwandige Anordnung bilden. Damit werden Wärmeverluste an der Kupplungsstelle minimiert.

Bei einer doppelwandigen Ausführung der Schnellkupplung 1 besteht jedoch das Problem, eine hinreichende mechanische Stabilität zu erzielen. Insbesondere können durch die Verriegelung erhebliche Kräfte in axialer Richtung auftreten, die von dem äußeren Wandungsteil auf das innere Wandungsteil mit den Dichtungselementen übertragen werden müssen, um eine sichere Abdichtung zu erzielen. Um die Kupplungsteile 3, 5 mechanisch zu stabilisieren und Kräfte mit Komponenten in axialer Richtung zwischen den inneren und äußeren Wandungselementen 32, 52, 33, 53 zu vermitteln, ist in Weiterbildung der Erfindung vorgesehen, dass das innere Wandungselement 32, 52 und das äußere Wandungselement 33, 53 eines Kupplungsteils 3, 5 in radialer Richtung ineinandergreifende Wandabschnitte 320, 520, 330, 530 aufweisen, welche eine axiale Verschiebung des äußeren Wandungselements 33, 53 gegenüber dem inneren Wandungselement 32, 52 verhindern. Die ineinandergreifenden Wandabschnitte 320, 330 des ersten Kupplungsteils 3 und die gleichfalls ineinandergreifenden Wandabschnitte 520, 530 des zweiten Kupplungsteils 5 sind in Fig. 3 bezeichnet.

Um den Abstand zwischen den Wandungselementen einzuhalten, werden zwischen dem äußeren und inneren Wandungselement 32, 33, beziehungsweise 52, 53 geeignete, zwischen den inneren und äußeren Wandungselementen angeordnete Abstandhalter 40 verwendet.

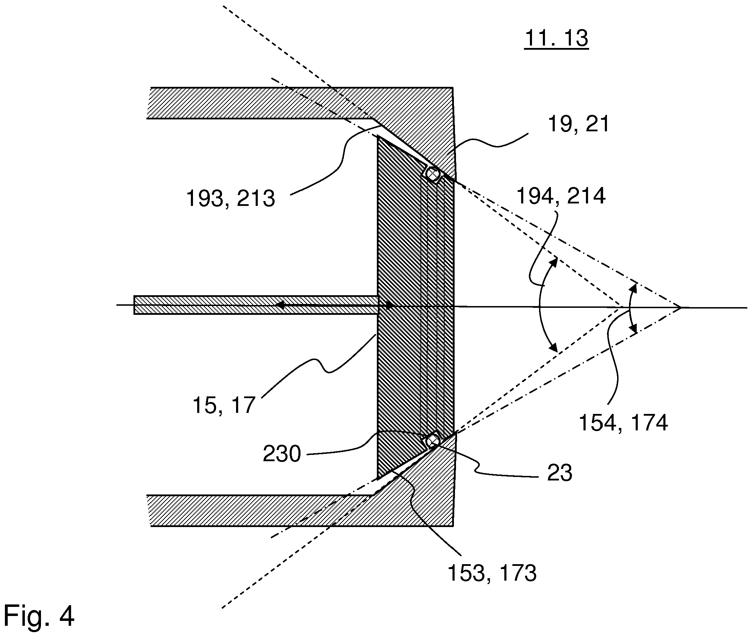

Fig. 4 zeigt Details der als Tellerventile ausgestalteten Ventilanordnungen 11, 13. Zum Zwecke der Übersichtlichkeit sind einige Teile, wie zum Beispiel die Öffnung 150 im Ventil 15 und die Federn 18 dabei nicht dargestellt. Das Ventil 15 der ersten Ventilanordnung 11 und/oder das Ventil 17 der zweiten Ventilanordnung 13 weisen konusförmig zulaufende erste Dichtflächen 153, beziehungsweise 173 auf. Auch die Ventilsitze 19, 21 weisen konusförmige zweite Dichtflächen 193, beziehungsweise 213 auf. Wie anhand von Fig. 4 zu erkennen ist, ist dabei der Öffnungswinkel 154, beziehungsweise 174 der ersten Dichtfläche 153, beziehungsweise 173 kleiner als der Öffnungswinkel 194, 214 der korrespondierenden zweiten Dichtfläche 193, 213 des jeweiligen Ventilsitzes 19, beziehungsweise 21.

Ein weiteres Merkmal der Ventilanordnungen 11, 13 ist, dass jeweils zumindest eine der konischen Dichtflächen 153, 173 eines Ventils 15, 17 und/oder des korrespondierenden Ventilsitzes 19, 21 ein tieftemperaturflexibles Kunststoff-Dichtungselement aufweisen. Bei dem speziellen, in Fig. 4 dargestellten Beispiel wird dazu ein tieftemperaturflexibler Dichtungsring 23 verwendet. Weiterhin ist bei diesem Beispiel der Dichtungsring 23 jeweils am Ventil 15, beziehungsweise 17 angeordnet. Um den Dichtungsring 23 an der Dichtfläche 153, beziehungsweise 173 zu fixieren, ist in der Dichtfläche 153, 173 eine ringförmig umlaufende Nut 230 eingefügt, in welcher der Dichtungsring 23 sitzt.

Der tieftemperaturflexible Dichtungsring 23 bewirkt die sichere Abdichtung auch bei tiefen Temperaturen. Die unterschiedlichen Koni 154, 174 und 194, 214 der korrespondierenden Dichtungsflächen 153, 193, beziehungsweise 173, 213 bewirken weiterhin eine Abdichtung entlang eines schmalen, linienförmigen Rings auf den Dichtungsflächen. Auf diesen schmalen Ring wirken entsprechend hohe Anpresskräfte. Selbst wenn eine Vereisung auf den Dichtflächen beim Schließen vorhanden sein sollte, kann diese durch den hohen Anpressdruck beseitigt werden. Zudem stellt die Abdichtung über die unterschiedlichen Koni sicher, dass auch im Falle eines Brandes und entsprechender sehr hoher Temperaturen an den Teilen der Ventilanordnungen 11, 13 die Abdichtung nicht versagt, selbst dann, wenn der Dichtungsring 23 beschädigt oder sogar zerstört wird.

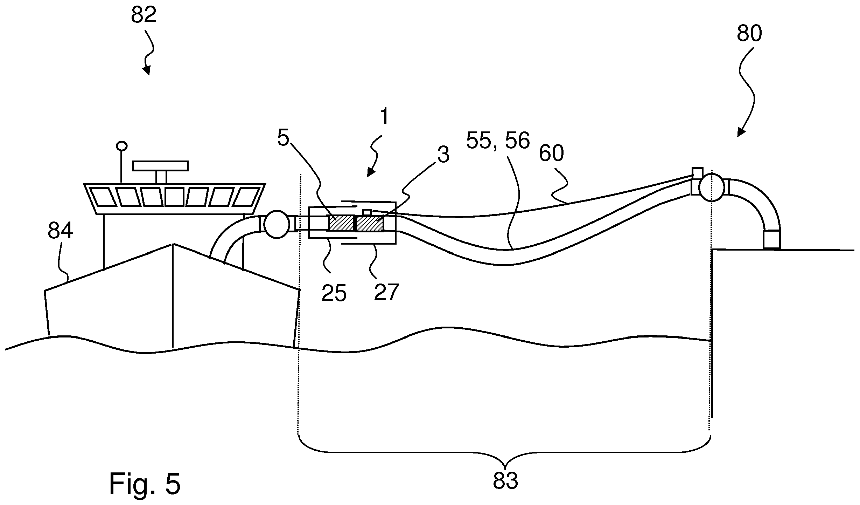

In Fig. 5 ist eine Anwendung einer erfindungsgemäßen Schnellkupplung 1 dargestellt. Im Speziellen ist in Fig. 5 eine Anordnung zur Förderung eines Fluids zwischen einer Be- oder Entladeeinrichtung 80 und einem Fahrzeug 82 gezeigt. Bei dem Ausführungsbeispiel der Fig. 5 ist das Fahrzeug 82 ein Schiff 84. Die Anwendung der erfindungsgemäßen Kupplung im maritimen Bereich oder spezieller im Schiffstransfer von Flüssigkeiten und Gasen ist besonders auch von Vorteil, da einerseits Emissionen und andererseits auch eine Kontamination der geförderten Fluide durch Meerwasser vermieden wird. Die Anordnung kann aber in gleicher Weise beispielsweise auch zur Be- und/oder Entladung von Waggons, Lastkraftwagen, sowie Luftfahrzeugen verwendet werden. Bei dem dargestellten Beispiel ist die Be- oder Entladeeinrichtung 80 an Land angeordnet. Ebenso kann aber auch eine Be- oder Entladung von Schiff zu Schiff, von Bohrinsel zu Schiff, oder von Schiff zu einer Boje mit einer erfindungsgemäßen Anordnung vorgenommen werden.

Um ein Fluid, wie beispielsweise kaltverflüssigtes Erdgas von der Be- oder Entladeeinrichtung 80 zum Fahrzeug 82 oder umgekehrt zu fördern, wird zwischen der Be- oder Entladeeinrichtung 80 und dem Fahrzeug 82 eine Leitung 55 mit einer Schnellkupplung 1 verlegt, wobei die Leitung 55 einen Schlauch 56 umfasst, an welchem eines der Kupplungsteile 3, 5 angebracht ist. Bei dem in Fig. 5 gezeigten Beispiel ist am Schlauch 56 das erste Kupplungsteil 3 angeschlossen.

Wie weiter anhand von Fig. 5 ersichtlich ist, wird die Schnellkupplung 1 im Zwischenraum 83 zwischen der Be- oder Entladeeinrichtung 80 und dem Fahrzeug 82 angeordnet. Ein Ende einer Zugeinrichtung ist an der Verriegelungsmechanik 9 und das andere Ende am Fahrzeug oder auf der Seite der Be- oder Entladeeinrichtung 80 verlegt, so dass die Zugeinrichtung entlang des Schlauchs 56 verläuft. Bei dem in Fig. 5 gezeigten Beispiel ist ein Seil oder Seilzug 56 als Zugeinrichtung vorgesehen. Ebenso kann ein Draht oder eine Kette verwendet werden. Weiterhin ist hier das eine Ende der Zugeinrichtung an der Be- oder Entladeeinrichtung 80 befestigt. Die umgekehrte Alternative mit einer Befestigung am Fahrzeug 82 ist ebenso möglich. In diesem Fall wird die Schnellkupplung vorzugsweise näher an der Be- oder Entladeeinrichtung 80 angeordnet.

Wie anhand von Fig. 5 weiter ersichtlich, ist die Länge der Zugeinrichtung so bemessen, dass bei einer Entfernung des Fahrzeugs 82 von der Be- oder Entladeeinrichtung 80 ein Zug auf die Zugeinrichtung ausgeübt wird, bevor der Schlauch 56 durch die Entfernung des Fahrzeugs 82 gespannt wird. Damit wird durch die Zugeinrichtung die Verriegelungsmechanik 9 betätigt, bevor der Schlauch 56 unter Spannung gerät. Diese Anordnung bietet besondere sicherheitstechnische Vorteile. Bei der Be- oder Entladung von Schiffen wurde eine Kupplung oft innerhalb der Bordwand im Bereich des Decks angeordnet. Dies ist an sich von Vorteil, da beim Trennen der Kupplung ein Austritt von Fluid auf den Bereich des Decks beschränkt wird und damit gefährliche Stoffe nicht in die Umwelt gelangen. Kommt es hier allerdings zu einer Nottrennung, so besteht durch den sich ablösenden Schlauch mit dem typischerweise sehr schweren, daran angeschlossenen Kupplungsteil eine erhebliche Gefahr für das auf dem Deck arbeitende Personal.

Wird demgegenüber eine erfindungsgemäße Schnellkupplung mit einer wie in Fig. 5 beispielhaft dargestellten Anordnung verwendet, so fällt der Schlauch 56 mit dem schweren Kupplungsteil 3 in den Zwischenraum 83 zwischen dem Fahrzeug und der Be- oder Entladeeinrichtung 80, bei einem Schiff 84 also in das dazwischenliegende Wasser. Eine Gefährdung für das Personal besteht hier nicht mehr. Gleichzeitig wird durch den besonderen Entkopplungsmechanismus auch ein Austritt des geförderten Fluids in die Umwelt vermieden, obschon die Kupplung über der Wasseroberfläche aufgetrennt wird und der Schlauch infolgedessen ins Wasser fallen kann.

Diese Anordnung bietet bei der Förderung brennbarer oder explosiver Fluide außerdem den Vorteil einer geringeren Brandgefahr, da brandauslösende Quellen typischerweise eher am oder auf dem Fahrzeug 82 oder der Be- oder Entladestation 80 vorhanden sind.

In Fig. 5 ist außerdem noch eine Weiterbildung der Erfindung dargestellt. Wie anhand der schematischen Zeichung ersichtlich, sind an den Kupplungsteilen 3, 5 die Kupplungsteile 3, 5 umgebende Hülsen oder Ummantelungen 25, 27 angebracht, welche in zusammengekoppeltem Zustand der Kupplungsteile 3, 5 in axialer Richtung überlappen. Diese Hülsen 25, 27 verhindern, dass Regen oder Spritzwasser auf die Kupplungsteile 3, 5 und die Verriegelungsmechanik 9 gelangen können. Gerade bei der Förderung kryogener Fluide könnte es sonst unter ungünstigen Bedingungen zu einer Eisbildung kommen. Das Eis könnte dann wiederum die Verriegelungsmechanik blockieren oder die Kupplungsteile 3, 5 mit einer Eisschicht derart umgeben, dass die Entkopplung der Kupplungsteile 3, 5 erschwert wird.

### Bezugszeichenliste

- 1: Schnellkupplung
- 3: erstes Kupplungsteil
- 5: zweites Kupplungsteil
- 7: Dichtung
- 9: Verriegelungsmechanik
- 11: erste Ventilanordnung
- 13: zweite Ventilanordnung
- 15, 17: Ventil
- 18: Feder
- 19, 21: Ventilsitz
- 23: tieftemperaturflexibler Dichtungsring
- 25, 27: Hülse
- 31, 51: Fluidkanal
- 32, 52: Innere Wandungselemente
- 33, 53: äußere Wandungselemente
- 40: Abstandhalter
- 55: Leitung
- 56: Schlauch
- 60: Seilzug
- 80: Be- oder Entladeeinrichtung
- 82: Fahrzeug
- 83: Zwischenraum zwischen 80, 82
- 84: Schiff
- 90: Drehelement
- 91: Exzenter
- 93, 94: Kragen
- 96: Klemmelement
- 97: Führungsfläche
- 110: Arretiereinrichtung
- 111: Arretierstift
- 150: Öffnung in 15
- 152: Stößel
- 153, 173: erste Dichtflächen
- 154, 174: Öffnungswinkel von 153, 173
- 155: Rohr
- 156: Öffnung in 155
- 193, 213: zweite Dichtflächen
- 194, 214: Öffnungswinkel von 193, 213
- 230: Nut

## Patentansprüche

1. Schnellkupplung (1) zum Aneinanderkoppeln fluidführender Leitungen, umfassend
- ein erstes Kupplungsteil (3) und
- ein zweites Kupplungsteil (5), sowie eine Dichtung (7) zum Abdichten der beiden Kupplungsteile (3, 5) in aneinandergekoppeltem Zustand, sowie
- eine Verriegelungsmechanik (9), um die beiden Kupplungsteile (3, 5) lösbar aneinander zu koppeln, wobei
- das erste Kupplungsteil (3) eine erste Ventilanordnung (11) und das zweite Kupplungsteil (5) eine zweite Ventilanordnung (13) aufweist, und wobei jede der beiden Ventilanordnungen (11, 13) ein axial verschiebbares Ventil (15, 17) und einen korrespondierenden Ventilsitz (19, 21) aufweist, so dass in zusammengeführtem Zustand von Ventil (15, 17) und Ventilsitz der jeweilige Fluidkanal (31, 51) des Kupplungsteiles (3, 5) fluiddicht abgedichtet ist, und wobei die Ventile (15, 17) in axialer Richtung gegenüberliegend angeordnet sind, wobei das Ventil (15) der ersten Ventilanordnung (11) eine Öffnung (150) aufweist, in welcher ein Stößel (152) axial beweglich gehaltert ist, so dass der Stößel (152) von einer ersten Stellung in eine zweite Stellung bewegbar ist, wobei in der zweiten Stellung der Stössel (152) aus dem Ventil (15) der ersten Ventilanordnung (11) weiter herausragt, als in der ersten Stellung, so dass in zusammengekoppeltem Zustand der Kupplungsteile (3, 5) der Stößel (152) die beiden Ventile (15, 17) auseinanderhält und damit die Fluidkanäle (31, 51) der Kupplungsteile (3, 5) miteinander verbunden sind, und wobei der Stößel (152) mit einer Arretiereinrichtung (110) in der zweiten axialen Stellung gegenüber dem Ventil (15) verrastbar ist,
**dadurch gekennzeichnet, dass** die Verriegelungsmechanik (9) mit der Arretiereinrichtung (110) wirkverbunden ist, so dass bei einer Betätigung der Verriegelungsmechanik (9) zur Entkopplung der beiden aneinander gekoppelten Kupplungsteile (3, 5) noch vor der Trennung der Kupplungsteile die Arretierung des Stößels (152) gelöst wird und die beiden Ventile (15, 17) mit dem jeweiligen Ventilsitz (19, 21) zusammengeführt werden und die Fluidkanäle (31, 51) der Kupplungsteile (3, 5) abdichten.

2. Schnellkupplung (1) gemäß dem vorstehenden Anspruch, **dadurch gekennzeichnet, dass** die Ventile (15, 17) konusförmige erste Dichtflächen (153, 173) und die Ventilsitze (19, 21) konusförmige zweite Dichtflächen (193, 213) aufweisen, wobei der Öffnungswinkel (154, 174) der ersten Dichtflächen (153, 173) kleiner als der Öffnungswinkel (194, 214) der zweiten Dichtflächen (193, 213) ist.

3. Schnellkupplung (1) gemäß einem der beiden vorstehenden Ansprüche, **dadurch gekennzeichnet, dass** die Ventile (15, 17) konusförmige erste Dichtflächen (153, 173) und die Ventilsitze (19, 21) konusförmige zweite Dichtflächen (193, 213) aufweisen, wobei jeweils zumindest eine der Dichtflächen (153, 173) eines Ventils (15, 17) und des korrespondierenden Ventilsitzes (19, 21) ein tieftemperaturflexibles Kunststoff-Dichtungselement aufweist.

4. Schnellkupplung (1) gemäß einem der vorstehenden Ansprüche, **dadurch gekennzeichnet, dass** die Verriegelungsmechanik (9) einen Auslösemechanismus umfasst, welcher bei einer vorbestimmten Zugspannung auf eine an den Auslösemechanismus angeschlossene Zugeinrichtung die Verriegelungsmechanik (9) betätigt und die Kupplungsteile (3, 5) trennt.

5. Schnellkupplung (1) gemäß einem der vorstehenden Ansprüche, **dadurch gekennzeichnet, dass** an den Kupplungsteilen (3, 5) die Kupplungsteile (3, 5) umgebende Hülsen (25, 27) angebracht sind, welche in zusammengekoppeltem Zustand der Kupplungsteile (3, 5) in axialer Richtung überlappen

6. Schnellkupplung (1) gemäß einem der vorstehenden Ansprüche, **dadurch gekennzeichnet, dass** die Kupplungsteile (3, 5) doppelwandig mit inneren Wandungselementen (32, 52) und die inneren Wandungselemente (32, 52) beabstandet umgebenden äußeren Wandungselementen (33, 53) ausgeführt sind, wobei die Dichtung (7) in zusammengekoppeltem Zustand die beiden inneren Wandungselemente (32, 52) der Kupplungsteile (3, 5) dichtend verbindet.

7. Schnellkupplung (1) gemäß dem vorstehenden Anspruch, **dadurch gekennzeichnet, dass** das innere Wandungselement (32, 52) und das äußere Wandungselement (33, 53) eines Kupplungsteils (3, 5) in radialer Richtung ineinandergreifende Wandabschnitte (320, 520, 330, 530) aufweisen, welche eine axiale Verschiebung des äußeren Wandungselements (33, 53) gegenüber dem inneren Wandungselement (32, 52) verhindern.

8. Schnellkupplung (1) gemäß einem der vorstehenden Ansprüche, **dadurch gekennzeichnet, dass** der Stößel (152) mit der Verriegelungsmechanik (9) derart wirkverbunden ist, dass beim Zusammenkuppeln der Kupplungsteile (3, 5) zunächst die beiden Kupplungsteile (3, 5) miteinander dichtend verbunden und nach der dichtenden Verbindung mittels der Verriegelungsmechanik der Stößel (152) in axialer Richtung bewegt wird, so dass die beiden Ventile (15, 17) auseinandergedrückt werden und damit die Fluidkanäle (31, 51) der Kupplungsteile (3, 5) öffnen und miteinander verbinden.

9. Schnellkupplung (1) gemäß einem der vorstehenden Ansprüche, **dadurch gekennzeichnet, dass** die Ventile (15, 17) jeweils mit einer Feder (18) gekoppelt sind, wobei die Feder (18) eine Kraft auf das Ventil (15, 17) axial in Richtung auf den Ventilsitz (19, 21) ausübt, um die Ventilanordnungen (11, 13) bei getrennten Kupplungsteilen (3, 5) zu verschließen.

10. Anordnung zur Förderung eines Fluids zwischen einer Be- oder Entladeeinrichtung (80) und einem Fahrzeug (82), insbesondere einem Schiff (84), Waggon oder Lastkraftwagen, wobei zwischen der Be- oder Entladeeinrichtung (80) und dem Fahrzeug (82) eine Leitung (55) mit einer Schnellkupplung (1) nach einem der vorstehenden Ansprüche verlegt ist, wobei die Leitung (55) einen Schlauch (56) umfasst, an welchem eines der Kupplungsteile (3,5) angebracht ist, und wobei die Kupplung im Zwischenraum (83) zwischen der Be- oder Entladeeinrichtung (80) und dem Fahrzeug (82) angeordnet ist, und wobei ein Ende einer Zugeinrichtung, insbesondere in Form eines Seils, Drahts oder einer Kette an der Verriegelungsmechanik (9) und das andere Ende am Fahrzeug oder auf der Seite der Be- oder Entladeeinrichtung (80) befestigt und deren Länge so bemessen ist, dass bei einer Entfernung des Fahrzeugs von der Be- oder Entladeeinrichtung ein Zug auf die Zugeinrichtung ausgeübt und die Verriegelungsmechanik betätigt wird, bevor der Schlauch (56) durch die Entfernung des Fahrzeugs (82) gespannt wird.

11. Verwendung einer Schnellkupplung (1) gemäß einem der vorstehenden Ansprüche zur Kopplung von Leitungen für kaltverflüssigtes Methan, insbesondere kaltverflüssigtes Erdgas.

## Claims

1. A quick-release coupling (1) for coupling fluid-conducting lines to one another, comprising:
- a first coupling part (3) and
- a second coupling part (5), and a seal (7) for sealing the two coupling parts (3, 5) when coupled together, and
- a locking mechanism (9) for coupling the two coupling parts (3, 5) together in a releasable manner, wherein
- the first coupling part (3) comprises a first valve arrangement (11) and the second coupling part (5) comprises a second valve arrangement (13), and wherein each of the two valve arrangements (11, 13) comprises an axially displaceable valve (15, 17) and a corresponding valve seat (19, 21) so that in the engaged state of the valve (15, 17) and the valve seat the respective fluid channel (31, 51) of the coupling part (3, 5) is sealed in a fluid-tight manner, and wherein the valves (15, 17) are arranged opposite to each other in the axial direction, wherein the valve (15) of the first valve arrangement (11) has an opening (150) in which a plunger (152) is mounted such that it is axially movable so that the plunger (152) is movable from a first position to a second position, wherein in the second position the plunger (152) projects further out of the valve (15) of the first valve arrangement (11) than in the first position, so that when the coupling parts (3, 5) are coupled together the plunger (152) holds the two valves (15, 17) apart from one another so that the fluid channels (31, 51) of the coupling parts (3, 5) are connected together,
and wherein the plunger (152) is lockable relative to the valve (15) in the second axial position by means of a locking device (110),
**characterized in that**
the locking mechanism (9) is operatively connected to the locking device (110) such that when the locking mechanism (9) is actuated for decoupling the two coupling parts (3, 5) which are coupled together, the locking of the plunger (152) is released and the two valves (15, 17) are engaged within the respective valve seat (19, 21) to seal the fluid channels (31, 51) of the coupling parts (3, 5) before the coupling parts are separated.

2. The quick-release coupling (1) according to the preceding claim, **characterized in that** the valves (15, 17) have cone-shaped first sealing surfaces (153, 173) and the valve seats (19, 21) have cone-shaped second sealing surfaces (193, 213), wherein the opening angle (154, 174) of the first sealing surfaces (153, 173) is smaller than the opening angle (194, 214) of the second sealing surfaces (193, 213).

3. The quick-release coupling (1) according to any one of the preceding claims, **characterized in that** the valves (15, 17) have cone-shaped first sealing surfaces (153, 173) and the vale seats (19, 21) have cone-shaped second sealing surfaces (193, 213), wherein in each case at least one of the sealing surfaces (153, 173) of a valve (15, 17) and of the corresponding valve seat (19, 21) are provided with a sealing element of plastic material which is flexible at low temperatures.

4. The quick-release coupling (1) according to any one of the preceding claims, **characterized in that** the locking mechanism (9) includes a triggering mechanism which, at a predefined tension on a pulling means connected to the triggering mechanism, actuates the locking mechanism (9) and separates the coupling parts (3, 5).

5. The quick-release coupling (1) according to any one of the preceding claims, **characterized in that** sleeves (25, 27) surrounding the coupling parts (3, 5) and overlapping in the axial direction when the coupling parts (3, 5) are coupled together, are mounted on the coupling parts (3, 5).

6. The quick-release coupling (1) according to any one of the preceding claims, **characterized in that** the coupling parts (3, 5) are formed with double walls with inner wall elements (32, 52) and outer wall elements (33, 53) surrounding the inner wall elements (32, 52) with a spacing therebetween, wherein in the interengaged state the seal (7) connects the two inner wall elements (32, 52) of the coupling parts in a sealing manner.

7. The quick-release coupling (1) according to the preceding claim, **characterized in that** the inner wall element (32, 52) and the outer wall element (33, 53) of a coupling part (3, 5) comprise radially interengaging wall portions (320, 520, 330, 530) which prevent the outer wall element (33, 53) from being displaced axially relative to the inner wall element (32, 52).

8. The quick-release coupling (1) according to any one of the preceding claims, **characterized in that** the plunger (152) is operatively connected to the locking mechanism (9) in such a manner that when the coupling parts (3, 5) are coupled together, first the two coupling parts (3, 5) are sealingly connected together and after the sealing engagement by means of the locking mechanism the plunger (152) is moved in axial direction such that the two valves (15, 17) are pressed apart from one another so as to open and connect together the fluid channels (31, 51) of the coupling parts (3, 5).

9. The quick-release coupling (1) according to any one of the preceding claims, **characterized in that** the valves (15, 17) are each coupled with a spring (18), wherein the spring (18) exerts an axial force on the valve (15, 17) in the direction of the valve seat (19, 21) in order to close the valve arrangements (11, 13) when the coupling parts are separated (3, 5).

10. An arrangement for conveying a fluid between a loading or unloading device (80) and a vehicle (82), in particular a ship (84), freight car or truck, wherein between the loading or unloading device (80) and the vehicle (82) a line (55) with a quick-release coupling (1) is laid, wherein the line (55) includes a hose (56), on which one of the coupling parts (3,5) is mounted, and wherein the coupling is arranged in the space (83) between the loading or unloading device (80) and the vehicle (82), and wherein one end of a pulling means, in particular in the form of a cable, wire or a chain is fastened to the locking mechanism (9) and the other end to the vehicle or on the side of the loading or unloading device (80) and the length thereof is dimensioned such that when the vehicle is moved away from the loading or unloading device a tension is exerted to the pulling means and the locking mechanism is actuated before the hose (56) is tensioned as a result of the vehicle (82) being moved away.

11. Use of a quick-release coupling (1) according to any one of the preceding claims for coupling lines for cold-liquefied methane, in particular cold-liquefied natural gas.

## Revendications

1. Raccord rapide (1) destiné à accoupler entre elles des conduites conductrices de fluides, comprenant :
- une première pièce d'accouplement (3), et
- une deuxième pièce d'accouplement (5), ainsi qu'un joint (7) pour étanchéifier les deux pièces d'accouplement (3, 5) en état d'accouplement, ainsi
- qu'un mécanisme de verrouillage (9) permettant un accouplement amovible des deux pièces d'accouplement (3, 5) entre elles,
dans lequel :
- la première pièce d'accouplement (3) comprend un premier dispositif de soupape (11) et la deuxième pièce d'accouplement (5) comprend un deuxième dispositif de soupape (13), et chacun des deux dispositifs de soupape (11, 13) comportant une soupape (15, 17) déplaçable axialement et un siège de soupape (19, 21) correspondant, de sorte qu'en état de réunion de la soupape (15, 17) et du siège de soupape, le canal de fluide (31, 51) de chaque pièce d'accouplement (3, 5) est étanchéifié contre les fluides, et les soupapes (15, 17) étant disposées l'une en face de l'autre dans la direction axiale,
la soupape (15) du premier dispositif de soupape (11) présentant une ouverture (150) dans laquelle un poussoir (152) est monté de manière axialement mobile, de sorte que ledit poussoir (152) est déplaçable d'une première position vers une deuxième position, où, dans la deuxième position, le poussoir (15 2) dépasse plus de la soupape (15) du premier dispositif de soupape (11) que dans la première position, de sorte qu'en état d'accouplement des pièces d'accouplement (3, 5), le poussoir (152) maintient les deux soupapes (15, 17) écartées, et ainsi les canaux de fluide (31, 51) des pièces d'accouplement (3, 5) sont reliés entre eux, et où le poussoir (152) peut s'enclencher par un dispositif de blocage (110) dans la deuxième position axiale par rapport à la soupape (15),
**caractérisé en ce que** :
le mécanisme de verrouillage (9) est en liaison active avec le dispositif de blocage (110), de sorte qu'un actionnement du mécanisme de verrouillage (9) pour le désaccouplement des deux pièces d'accouplement (3, 5) accouplées l'une à l'autre avant séparation des pièces d'accouplement débloque le poussoir (152) et que les deux soupapes (15, 17) sont réunies à leurs sièges de soupape (19, 21) respectifs et étanchéifient les canaux de fluide (31, 51) des pièces d'accouplement (3, 5).

2. Raccord rapide (1) selon la revendication précédente, **caractérisé en ce que** les soupapes (15, 17) présentent des premières surfaces d'étanchéité (153, 173) en forme de cône et les sièges de soupape (19, 21) présentent des deuxièmes surfaces d'étanchéité (193, 213) en forme de cône, dans lequel l'angle d'ouverture (154, 174) des premières surfaces d'étanchéité (153, 173) est inférieur à l'angle d'ouverture (194, 214) des deuxièmes surfaces d'étanchéité (193, 213).

3. Raccord rapide (1) selon l'une des deux revendications précédentes, **caractérisé en ce que** les soupapes (15, 17) présentent des premières surfaces d'étanchéité (153, 173) en forme de cône et les sièges de soupape (19, 21) présentent des deuxièmes surfaces d'étanchéité (193, 213) en forme de cône, dans lequel respectivement au moins une des surfaces d'étanchéité (153, 173) d'une soupape (15, 17) et du siège de soupape (19, 21) correspondant comporte un élément de joint plastique flexible à basse température.

4. Raccord rapide (1) selon l'une des revendications précédentes, **caractérisé en ce que** le mécanisme de verrouillage (9) comprend un mécanisme de déclenchement qui actionne le mécanisme de verrouillage (9) et sépare les pièces d'accouplement (3, 5) en cas de contrainte de traction prédéfinie sur un dispositif de traction relié au mécanisme de déclenchement.

5. Raccord rapide (1) selon l'une des revendications précédentes, **caractérisé en ce que** des douilles (25, 27) entourant les pièces d'accouplement (3, 5) sont appliquées contre les pièces d'accouplement (3, 5), lesquelles se chevauchent dans la direction axiale en état d'accouplement des pièces d'accouplement (3, 5).

6. Raccord rapide (1) selon l'une des revendications précédentes, **caractérisé en ce que** les pièces d'accouplement (3, 5) sont réalisées à paroi double, avec des éléments de paroi intérieurs (32, 52) et des éléments de paroi extérieurs (33, 53) espacés des éléments de paroi intérieurs (32, 52) et entourant ceux-ci, dans lequel le joint (7) raccorde de manière étanche les deux éléments de paroi intérieurs (32, 52) des pièces d'accouplement (3, 5) en état d'accouplement.

7. Raccord rapide (1) selon la revendication précédente, **caractérisé en ce que** l'élément de paroi intérieur (32, 52) et l'élément de paroi extérieur (33, 53) d'une pièce d'accouplement (3, 5) présentent des segments de paroi (320, 520, 330, 530) qui s'emboîtent l'un dans l'autre dans la direction radiale et empêchent un déplacement axial de l'élément de paroi extérieur (33, 53) par rapport à l'élément de paroi intérieur (32, 52).

8. Raccord rapide (1) selon l'une des revendications précédentes, **caractérisé en ce que** le poussoir (152) est en liaison active avec le mécanisme de verrouillage (9) de telle sorte qu'un accouplement des pièces d'accouplement (3, 5) raccorde d'abord de manière étanche les deux pièces d'accouplement (3, 5), et que le poussoir (152) est déplacé dans la direction axiale après raccordement d'étanchéité au moyen du mécanisme de verrouillage, de sorte que les deux soupapes (15, 17) sont écartées l'une de l'autre en ouvrant et en reliant l'un à l'autre les canaux de fluide (31, 51) des pièces d'accouplement (3, 5).

9. Raccord rapide (1) selon l'une des revendications précédentes, **caractérisé en ce que** les soupapes (15, 17) sont accouplées chacune à un ressort (18), dans lequel le ressort (18) exerce une force axiale sur la soupape (15, 17) dans la direction du siège de soupape (19, 21) pour obturer les dispositifs de soupape (11, 13) lorsque les pièces d'accouplement (3, 5) sont séparées.

10. Dispositif pour la circulation d'un fluide entre un dispositif de chargement ou de déchargement (80) et un véhicule (82), en particulier un bateau (84), un wagon ou un véhicule poids lourd, dans lequel une conduite (55) avec un raccord rapide (1) selon l'une des revendications précédentes est posée entre le dispositif de chargement ou de déchargement (80) et le véhicule (82), dans lequel la conduite (55) comprend un tuyau flexible (56) sur lequel est montée une des pièces d'accouplement (3,5), et dans lequel l'accouplement est présenté dans l'intervalle (83) entre le dispositif de chargement ou de déchargement (80) et le véhicule (82), et dans lequel une extrémité d'un dispositif de traction, en particulier sous forme de filin, de câble ou de chaîne est fixée sur le mécanisme de verrouillage (9) et l'autre extrémité sur le véhicule ou côté dispositif de chargement ou de déchargement (80), et la longueur de celui-ci est prévue pour qu'un éloignement du véhicule du dispositif de chargement ou de déchargement exerce une traction sur le dispositif de traction et actionne le mécanisme de verrouillage avant tension du tuyau (56) du fait de l'éloignement du véhicule (82).

11. Utilisation d'un raccord rapide (1) selon l'une des revendications précédentes pour l'accouplement de conduites de méthane liquéfié à froid, en particulier de gaz naturel liquéfié à froid.
